# EUROPÄISCHE PATENTANMELDUNG

(11) **EP 0 955 778 A2**
(43) Veröffentlichungstag der Anmeldung: **10.11.1999**
(21) Anmeldenummer: 99108803.0
(22) Anmeldetag: 04.05.1999
(51) Int. Cl.: H04Q 7/22, H04M 3/50

(54) **Verfahren zur Abfrage und Pflege einer automatischen Rufnummernauskunft in Mobilkommunikationssystemen**

(30) Priorität: 05.05.1998 DE 19819643
(71) Anmelder: DeTeMobil Deutsche Telekom MobilNet GmbH, 53227 Bonn (DE)
(72) Erfinder: Zschnitzsch, Hans, 53639 Königswinter (DE)

(57) **Zusammenfassung**

Die Erfindung betrifft ein Verfahren zur Abfrage und Pflege einer automatischen Rufnummernauskunft in Mobilkommunikationssystemen. Das Verfahren ist gekennzeichnet durch die Verwendung von Kurznachrichten (SM) zum teilnehmerindividuellen Anlegen, Abfragen, Ändern und/oder Löschen von Auskunftsdatensätzen in einer Auskunftdatenbank einer Zentralstelle.

## Beschreibung

Die Erfindung betrifft ein Verfahren zur Abfrage und Pflege einer automatischen Rufnummernauskunft in Mobilkommunikationssystemen.

Jeder Teilnehmer eines mobilen oder festen Telekommunikationsnetzes kennt die Möglichkeit der Rufnummernauskunft. Durch Anwahl einer bestimmten Rufnummer wird der Teilnehmer mit der Rufnummernauskunft verbunden, wobei sich ein Operator meldet, welcher den Auskunftswunsch entgegennimmt, die zugehörige Rufnummer recherchiert und dem Teilnehmer mitteilt. Nachteil bei dieser Rufnummernauskunft ist, daß bei ungenauen oder unvollständigen Angaben seitens des Teilnehmers es dem Operator nicht möglich ist, die zugehörige Rufnummer zu ermitteln. Dies ist allein aus Zeit- und Kostengründen nicht möglich.

Die Aufgabe der vorliegenden Erfindung besteht darin, ein Verfahren zur Abfrage und Pflege einer automatischen Rufnummernauskunft in Mobilkommunikationssystemen vorzuschlagen, welches eine flexiblere und kostengünstige Auskunft ermöglicht.

Diese Aufgabe wird durch die kennzeichnenden Merkmale des Patentanspruchs 1 gelöst.

Wesentliches Merkmal der Erfindung ist die Möglichkeit der eigenhändigen Abfrage und Pflege eines elektronischen Telefonbuches mit Hilfe von Kurznachrichten (Short Messages). Die Pflege des jeweiligen Auskunftseintrages erfolgt durch den Benutzer selbst.

Gemäß einer Weiterbildung der vorliegenden Erfindung ist vorgesehen, daß die abgefragten Auskunftsdatensätze von der Zentralstelle an die in der abfragenden Kurznachricht angegebene Teilnehmerrufnummer übermittelt werden.

Das bedeutet ferner, daß die Auskunftsdatensätze untrennbar mit der Teilnehmeridentität, die z. B. durch die Rufnummer vorgegeben ist, verknüpft sind. Ein Anlegen, Abfragen, Ändern und/oder von Auskunftsdatensätzen ist nur durch den berechtigten Teilnehmer selbst möglich.

Die Authentisierung des Teilnehmers zur Benutzung der Rufnummernauskunft erfolgt vorteilhaft durch die dem Mobilkommunikationsnetz eigene Authentisierungssequenz, die beim Einbuchen in das Mobilkommunikationsnetz aktiviert wird.

Ein wesentlicher Vorteil der Erfindung besteht darin, daß der Benutzer selbst die Möglichkeit hat, Telefonbucheinträge selbst zu kreieren und zu verwalten und diese jederzeit und kostengünstig über den Kurznachrichtendienst abzurufen.

Ein weiterer Vorteil ist, daß eine flexible Abfragesyntax vorgeschlagen wird, durch welche es möglich ist, auch bei ungenauen oder unvollständigen Suchanfragen mit großer Sicherheit die richtige Auskunft zu erhalten.

Im folgenden wird die Erfindung anhand eines Ausführungsbeispiels näher erläutert.

Ein Aspekt der Erfindung besteht in der Kombination von Frageparametern und der Handhabung derselben, um die Antworten zu erzeugen, insbesondere bei ungenauer oder unvollständiger Information. Da die Abfrage der Rufnummernauskunft über ein Mobilendgerät erfolgt, muß die für den Benutzer im allgemeinen etwas unbequeme Art der Zeicheneingabe über die Tastatur berücksichtigt werden.

Eine Abfrage wird in Form einer Kurznachricht am Mobilendgerät eingegeben und an die Zentralstelle übermittelt. Die Absenderangabe, d. h. die Rufnummer des abfragenden Teilnehmers, ist eine implizite Information innerhalb dieser Kurznachricht. An diese in der abfragenden Kurznachricht enthaltene Rufnummer wird die Antwort, bestehend aus einer oder mehreren Kurznachrichten, an den Teilnehmer übermittelt.

Die Abfrage selbst besteht aus mindestens einem, im allgemeinen jedoch mehreren Suchworten.

Die Reihenfolge der Suchworte in der Abfragenachricht ist wesentlich, weil sie die Bewertung der möglichen Antworten beeinflußt.

Ein Suchwort besteht aus einer bestimmten Zeichenfolge. Im Suchwort sind im allgemeinen alle Zeichen aus dem Kurznachrichten-Zeichenvorrat erlaubt. Zwei Zeichen spielen eine besondere Rolle. Als Beispiel sei hier das Trennzeichen 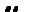 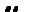 (Leerschritt) und der in diesem Kontext sogenannte Joker 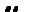 *" genannt. Das Trennzeichen 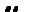 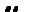 trennt Suchworte voneinander. Soll das Trennzeichen im Suchwort vorkommen, ist eine besondere Syntax einzuhalten, z. B. sind zwei unmittelbar aufeinanderfolgende Trennzeichen zu schreiben.

Der Joker 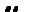 *" spielt eine besondere Rolle. Er steht stellvertretend für eine beliebige Zeichenfolge. Soll der Joker als gewöhnliches Zeichen im Suchwort vorkommen, so ist er unmittelbar aufeinanderfolgend zweimal zu schreiben.

Beispielsweise steht das Suchwort
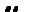 Ha*" für 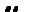 Hans", aber auch für 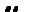 Hannelore",
und 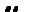 ha*s" für 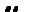 Hans", aber auch für 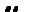 Hannes".

Die Suche nach Alexander Berg aus Gais kann also folgendermaßen formuliert werden: 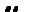 Al* Be* Ga*". Mit dieser Suchanfrage würde aber auch der Teilnehmernamen Alfred Bergs aus Gartenstadt gefunden werden.

Ein wesentlicher Aspekt der Erfindung ist, daß ein Benutzer seine Auskunftsdatensätze in der Auskunftsdatenbank selbst verwalten, kreieren, ändern und/oder löschen kann. Zur Authentisierung dieses Teilnehmers wird die dem Mobilfunknetz eigene Authentisierungssequenz verwendet.

Ein Dateneintrag in der Auskunftsdatenbank ist untrennbar mit der Absenderangabe verknüpft. Jede Veränderung existierender Auskunftseinträge ist nur vom gleichen Absender durchführbar.

Das erstmalige Anlegen eines Auskunftsdatensatzes oder eine Veränderung des Auskunftsdatensatzes erfolgt durch eine Kurznachricht. Dazu gibt der Benutzer wie weiter oben beschrieben eine entsprechende Zeichenfolge an seinem Mobilfunkendgerät ein und übermittelt diese als Kurznachricht an die Zentralstelle. Um eine Anweisung des Benutzers von Suchanfragen zu unterscheiden, beginnt der Nachrichtentext einer Anweisung mit einem wohl definierten Komandozeichen z. B. 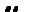 !" unmittelbar gefolgt von mindestens einem weiteren Komandobuchstaben. Z. B. kann ein neuer Benutzereintrag mit der laufenden Nummer 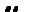 x" durch folgende Anweisung erzeugt werden:
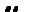 !Nx Alexander Berg Gais + 49224123456.."

In der Zentralstelle wird der Antworttext 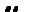 Alexander Berg" in geeigneter Weise verknüpft mit der Absenderrufnummer und dem aktuellen Datum und gegebenenfalls weiteren Informationen. Bei einer Abfrage wird in der Auskunftsdatenbank eine Antwortmenge erzeugt, wobei im wesentlichen der Grad der Übereinstimmung jeder potentiellen Antwort mit dem Abfragetext berücksichtigt und die 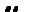 besten" Datensätze als Antworten dem abfragenden Teilnehmer übermittelt werden.

Die Anweisung
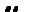 !H..." oder 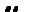 !?..."
liefert z. B. einen Hilfstext, eine Erläuterung oder eine Bedienungsanleitung an den abfragenden Teilnehmer. Durch einen Parameter kann die Sprache der Auskunft festgelegt werden, so daß auch Fremdteilnehmer die Rufnummernauskunft nutzen können.

Die Anweisung
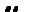 !Lx" oder 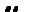 !L*"
listet einem von einem Benutzer erzeugten Eintrag, im Beispiel den X-ten bzw. alle Einträge.

Die Anweisung
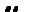 !DELx" oder 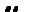 !DEL*"
löscht einen Benutzereintrag, im Beispiel den X-ten bzw. alle vorhandenen Benutzereinträge.

## Patentansprüche

1. Verfahren zur Abfrage und Pflege einer automatischen Rufnummernauskunft in Mobilkommunikationssystemen, **gekennzeichnet durch** die Verwendung von Kurznachrichten (SM) zum teilnehmerindividuellen Anlegen, Abfragen, Ändern und/oder Löschen von Auskunftdatensätzen in einer Auskunftdatenbank einer Zentralstelle.

2. Verfahren nach Anspruch 1, **dadurch gekennzeichnet**, daß die abgefragten Auskunftdatensätze von der Zentralstelle an die in der abfragenden Kurznachricht angegebene Teilnehmerrufnummer übermittelt werden.

3. Verfahren nach einem der Ansprüche 1 oder 2, **dadurch gekennzeichnet**, daß die Auskunftsdatensätze untrennbar mit der Teilnehmeridentität verknüpft sind.

4. Verfahren nach einem der Ansprüche 1 bis 3, **dadurch gekennzeichnet**, daß ein Anlegen, Abfragen, Ändern und/oder Löschen von Auskunftsdatensätzen nur durch den berechtigten Teilnehmer selbst erfolgen kann.

5. Verfahren nach einem der Ansprüche 1 bis 4, **dadurch gekennzeichnet**, daß die Authentisierung des Teilnehmers durch die dem Mobilkommunikationsnetz eigene Authentisierungssequenz erfolgt.

6. Verfahren nach einem der Ansprüche 1 bis 5, **dadurch gekennzeichnet**, daß die Kurznachricht mindestens ein Suchwort bestehend aus einer Zeichenfolge enthält.
